# EUROPEAN PATENT APPLICATION

(11) **EP 4 714 723 A1**
(43) Date of publication of application: **25.03.2026**
(21) Application number: 24842162.0
(22) Date of filing: 26.06.2024
(51) Int. Cl.: B60L 15/20, B60K 6/405, F16H 57/04

(54) **ELECTRIC DRIVE SYSTEM AND ELECTRIC DRIVE VEHICLE**

(30) Priority: 19.07.2023 CN 202310896619
(71) Applicant: Dongfeng Motor Group Co., Ltd., Wuhan, Hubei 430000 (CN)
(72) Inventor: YU, Jiajia, Wuhan, Hubei 430000 (CN); XUE, Long, Wuhan, Hubei 430000 (CN); XU, Jing, Wuhan, Hubei 430000 (CN); JIN, Xiang, Wuhan, Hubei 430000 (CN)
(74) Representative: Valet Patent Services Limited
(86) International application number: PCT/CN2024/101638
(87) International publication number: WO 2025/016164

(57) **Abstract**

An electric drive system (1) comprises an electric motor (10), a transmission (20), and a bottom oil passage (40). The electric motor (10) comprises an electric motor housing (11). The electric motor housing (11)comprises an electric motor cavity (11A) and oil inlets (20). The transmission is in power connection with the electric motor (10). The transmission comprises a transmission housing (21), the transmission housing (21) comprises a transmission cavity (21C) and oil outlets. The bottom oil passage (40) is in communication with the electric motor cavity (11A)and the transmission cavity (21C). When the electric drive system (1) is in a horizontal state, heights of all the oil inlets are not lower than that of any oil outlet, and the oil inlets connected to the bottom oil passage (40) are arranged circumferentially at a bottom of the electric motor housing (11), to enable an oil in the electric motor cavity (11A)to flow back into the transmission cavity (21C) in a first preset gradient state of the electric drive system (1), ensuring an appropriate level of oil within the electric drive system.

## Description

### CROSS-REFERENCE TO RELATED APPLICATION

This application claims priority to Chinese Patent Application No. 202310896619.4 filed on July 19, 2023, the entire contents of which are incorporated herein by reference.

### TECHNICAL FIELD

This invention relates to the field of electric vehicles, and in particular, to an electric drive system and an electric drive vehicle.

### BACKGROUND

With an increase in integration of pure electric drive system, an oil cooling of a drive electric motor has become a trend. Both a rotor and a stator of electric motor are directly sprayed by a transmission oil for cooling. The transmission oil, after dissipates a heat from windings, flows by gravity into a lower portion of an electric motor cavity. This portion of the transmission oil flows back to a gear cavity and continues to participate in a cooling and lubrication cycle of an electric drive system.

Some vehicles such as off-road vehicles often experience body tilting when operating under harsh conditions such as longitudinal slope, transverse slope and the like, resulting in an abnormal level of oil in the electric drive system installed on the vehicle. The abnormal level of oil may cause an oil pump to draw in air, leading to insufficient cooling, noise and vibration problems, thereby increasing churning loss, and reducing mechanical efficiency of the electric motor.

### SUMMARY

In view of this, embodiments of this invention provide an electric drive system and an electric drive vehicle, to solve the problem that an abnormal level of oil of an electric drive system affects operation of an electric drive vehicle under harsh conditions.

An embodiment of this invention provides an electric drive system, comprising: an electric motor comprising an electric motor housing which has an electric motor cavity and oil inlets in communication with the electric motor cavity; a transmission, in power connection with the electric motor, the transmission comprising a transmission housing which has a transmission cavity and oil outlets in communication with the transmission cavity; and a bottom oil passage, in communication with the electric motor cavity and the transmission cavity, an end of the bottom oil passage being connected to a corresponding oil inlet, an end of the bottom oil passage being connected to a corresponding oil outlet;
wherein, when the electric drive system is in a horizontal state, a height of all the oil inlets is not lower than a height of any oil outlet, the oil inlets connected to the bottom oil passage are arranged circumferentially at a bottom of the electric motor housing, so that when the electric drive system is in a first preset gradient state, oil in the electric motor cavity can flow back to the transmission cavity.

Optionally, the electric motor housing and the transmission housing are a housing integrally formed.

Optionally, the bottom oil passage is provided on the electric motor housing to form a bottom oil channel.

Optionally, the electric motor housing has a partition wall separating the electric motor cavity and the transmission cavity, the bottom oil passage being provided on the partition wall to form an oil return port, the oil return port being arranged circumferentially on the partition wall.

Optionally, the electric drive system further comprises a first control valve which is fixed on the partition wall for controlling an opening and closing of the bottom oil passage; wherein when the electric drive system is in a horizontal state, the first control valve is in an open state; when the electric drive system is in a second preset gradient state, the first control valve is in a closed state.

Optionally, the first control valve is a movable baffle, a normal projection of the movable baffle covering the oil outlet connected to the bottom oil channel.

Optionally, the transmission housing comprises a stepped wall which is located below the bottom oil channel, the stepped wall comprising an inclined wall, the inclined wall being located in an oil discharge direction of the oil outlet connected to the bottom oil channel, the movable baffle being capable of attaching to the inclined wall when the electric drive system is in a second preset gradient state.

Optionally, a cross-sectional shape of the bottom oil channel or the oil return port is a shape of annular sector.

Optionally, the electric drive system further comprises a bypass oil passage which is provided outside the electric motor housing and in communication with the electric motor cavity and the transmission cavity, an end of each bypass oil passage being connected to a corresponding oil inlet, another end of each bypass oil passage being connected to a corresponding oil outlet.

Optionally, the transmission comprises an input shaft and an output shaft that have a height difference, a connecting line of the oil inlet and the oil outlet that are connected by the bypass oil passage being disposed at an angle to a horizontal plane when the electric drive system is in a horizontal state; and.

Optionally, the electric motor comprises a reinforcing plate, a side of the reinforcing plate being connected to an outside of the transmission housing, another side of the reinforcing plate being connected to an outside of the electric motor housing, the bypass oil passage being provided in the reinforcing plate to form a bypass oil channel.

Optionally, the electric motor comprises a second control valve which is disposed in the reinforcing plate and connected to the bypass oil channel, the second control valve blocking the bypass oil channel when the bypass oil channel is tilted, and the oil outlet connected to the bypass oil channel is higher than the oil inlet connected to the bypass oil channel.

Optionally, the transmission housing comprises an oil baffle rib, the transmission cavity comprises a gear cavity and an oil suction cavity which are separated by the oil baffle rib, the oil outlet connected to the bypass oil passage being in communication with the gear cavity, the oil outlet connected to the bottom oil passage being in communication with the oil suction cavity.

An embodiment of this invention further provides an electric drive vehicle, the electric drive vehicle being provided with the electric drive system according to any of the above embodiments.

### ADVANTAGEOUS EFFECTS

The electric drive system provided by embodiments of this invention comprises a transmission, an electric motor, and a bottom oil passage. The electric motor comprises an electric motor housing which has an electric motor cavity and an oil inlet in communication with the electric motor cavity; the transmission is in power connection with the electric motor, the transmission comprising a transmission housing, the transmission housing having a transmission cavity and an oil outlet in communication with the transmission cavity; the bottom oil passage is in communication with the electric motor cavity and the transmission cavity, an end of the bottom oil passage being connected to a corresponding oil inlet, and an end of the bottom oil passage being connected to a corresponding oil outlet. When the electric drive system is in a horizontal state, heights of all the oil inlets are not lower than a height of any oil outlet, an oil in the electric motor cavity can flow back to the transmission cavity, so that the transmission cavity has an oil liquid with an appropriate level; when the electric drive system is in a first preset gradient state, since the oil inlets connected to the bottom oil passage are arranged circumferentially at a bottom of the electric motor housing, the bottom oil passage enables the oil in the electric motor cavity to still flow back to the transmission cavity. Under different working conditions, the transmission cavity maintains an appropriate level of oil as much as possible. This invention further provides an electric drive vehicle provided with the above electric drive system, which can adapt to driving conditions on different inclined road surfaces, thereby improving a stability of the electric drive system.

### BRIEF DESCRIPTION OF DRAWINGS

FIG. 1 is a structural schematic diagram of an electric drive system according to the invention.
FIG. 2 is a partial structural schematic diagram from a right perspective of an electric drive system according to the invention, with gears of transmission omitted;
FIG. 3 is a cross-sectional partial structural schematic diagram from a rear perspective of the electric drive system according to the invention, the electric drive system being in a horizontal state;
FIG. 4 is a cross-sectional partial structural schematic diagram from the rear perspective of the electric drive system according to the invention, the electric drive system being in a first preset gradient state;
FIG. 5 is a partial structural schematic diagram from a left perspective of the electric drive system according to the invention; and
FIG. 6 is a schematic diagram showing an level of oil of the electric drive system under a preset transverse slope condition according to the invention.

### REFERENCE NUMERALS

1, electric drive system;
10, electric motor; 11, electric motor housing; 11A, electric motor cavity; 12, partition wall; 13, reinforcing plate;
20, transmission; 21, transmission housing; 21A, gear cavity; 21B, oil suction cavity; 21C, transmission cavity; 211, stepped wall; 2111, inclined wall; 212, oil baffle rib;
30, first control valve;
40, bottom oil passage; 41, bottom oil channel; 42, oil return port;
50, bypass oil passage; 51, bypass oil channel.

### DETAILED DESCRIPTION

The embodiments of this invention will be further described in detail below with reference to the drawings and embodiments. The following embodiments are used to illustrate the invention, but cannot be used to limit the scope of this invention.

In the description of the embodiments of this invention, it should be noted that the orientation or positional relationships indicated by the terms "front", "back", "left", "right" and the like are based on those shown in the drawings, and are only for the convenience of describing the embodiments of this invention and simplifying the description, and are not intended to indicate or imply that the device or element referred to must have a specific orientation, or be constructed and operated in a specific orientation. Therefore, theses terms are not be construed as limiting the embodiments of this invention. In addition, the terms "first" and "second" are for descriptive purposes only and are not be interpreted as indicating or implying relative importance.

In the description of the embodiments of this invention, it should be noted that, unless otherwise expressly specified and limited, the term "connection" should be interpreted broadly, for example, it can be a fixed connection, a detachable connection, or an integrated connection; it can be a mechanical connection, or an electrical connection; it can be a direct connection, or an indirect connection through an intermediate medium. For those skilled in the art, the specific meanings of the above terms in the embodiments of the invention can be understood according to the specific circumstances.

In the embodiments of this invention, unless otherwise expressly specified and limited, a first feature being "on" or "under" a second feature can be that the first feature and the second feature are in direct contact, or the first feature and the second feature are in indirect contact through an intermediate medium. Moreover, a first feature being "over", "above", or "on top of" a second feature can be that the first feature is directly above or obliquely above the second feature, or merely indicates that the horizontal level of the first feature is higher than that of the second feature. A first feature being "under", "below", or "beneath" a second feature can be that the first feature is directly below or obliquely below the second feature, or only indicates that the horizontal level of the first feature is lower than that of the second feature.

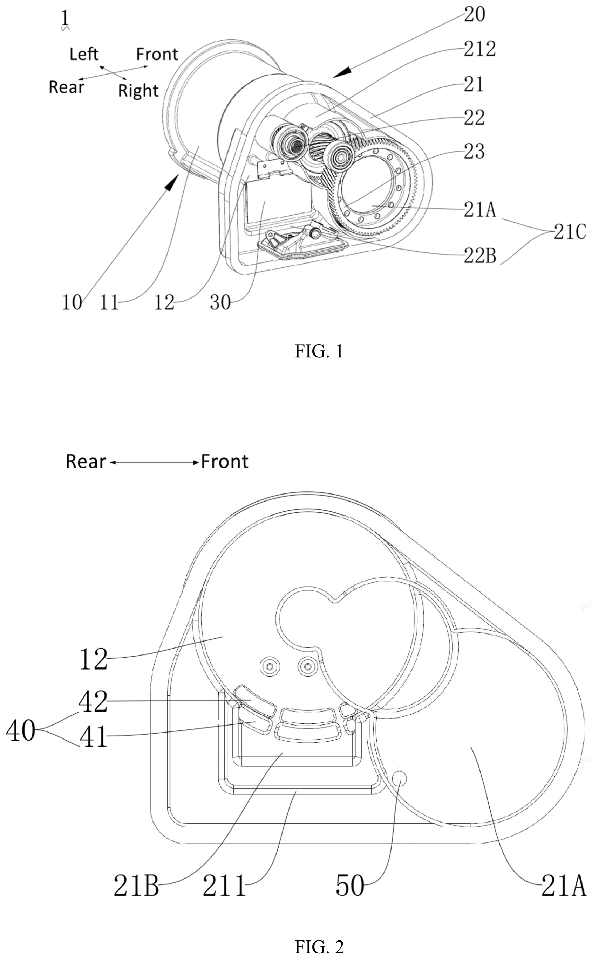

An embodiment of this invention provides an electric drive system 1. As shown in FIGS. 1 to 5, the electric drive system 1 comprises an electric motor 10, a transmission 20, and a bottom oil passage 40. The electric motor 10 comprises an electric motor housing 11. The electric motor housing 11 has an electric motor cavity 11A and an oil inlet in communication with the electric motor cavity 11A. The transmission 20 is in power connection with the electric motor 10, and comprises a transmission housing 21. The transmission housing 21 has a transmission cavity 21C and an oil outlet in communication with the transmission cavity 21C. The bottom oil passage 40 is in communication with the electric motor cavity 11A and the transmission cavity 21C, one end of the bottom oil passage 40 being connected to a corresponding oil inlet, one end of the bottom oil passage 40 being connected to a corresponding oil outlet.

Optionally, when the electric drive system 1 is in a horizontal state, heights of all the oil inlets are not lower than a height of any oil outlet, and the oil inlets connected to the bottom oil passage are arranged circumferentially at a bottom of the electric motor housing 11, so that an oil in the electric motor cavity 11A can flow back to the transmission cavity 21C when the electric drive system 1 is in a first preset gradient state.

Optionally, as shown in FIG. 1, the "horizontal state" refers to that the electric drive system 1 maintains a horizontal state in a front-rear direction and in a left-right direction.

Optionally, the "first preset gradient state" refers to that the electric drive system, under some working conditions, tilts forward or backward in the front-rear direction, for example, the electric drive system 1 is fixedly mounted on a vehicle, and the first preset gradient state may be a state under which, the electric drive system 1 tilts backward by 45° when the vehicle is climbing longitudinally with a slope of 100%. According to different installation modes of driving components of the electric drive vehicle, the first preset gradient state may be a preset longitudinal slope state or a preset lateral gradient state.

Optionally, "arranged circumferentially at a bottom of the electric motor housing" refers to an arrangement where components are disposed within a circumferential region near the bottom of the electric motor For example, the components may be arranged circumferentially along the lower half of the electric motor housing 11, or within a circumferential region directly below the electric motor housing 11 that subtends a central angle of 60~120 degrees.

When the electric drive system 1 tilts in the front-rear direction, an oil in the electric motor cavity 11A is also changed adaptively. Because the corresponding oil inlets connected to the bottom oil passage are arranged circumferentially on the electric motor housing 11, and an angle of arrangement of the corresponding oil inlet can be adjusted according to requirements of working condition that need to be adapted, the oil always enters the corresponding oil inlets connected to the bottom oil passage 40, to return into the transmission cavity 21C, improving a condition of level of internal oil when the electric drive system 1 tilts forward and backward. For example, as shown in FIG. 2, if the electric drive system 1 is high in front and low in rear, the oil enters the bottom oil passage 40 along the oil inlets at a rear in FIG. 2 (for example, a rear portion of annular sector-shaped regions 41, 42 indicated in FIG. 2). If the electric drive system 1 is low in front and high in rear, the oil enters the bottom oil passage 40 along the oil inlets at a front in FIG. 2 (for example, a front portion of the annular sector-shaped regions 41, 42 indicated in FIG. 2). Optionally, the electric motor housing 11 and the transmission housing 21 are integrally formed, for example, are manufactured using a casting forming process, improving an overall sealing and integration of the electric drive system 1.

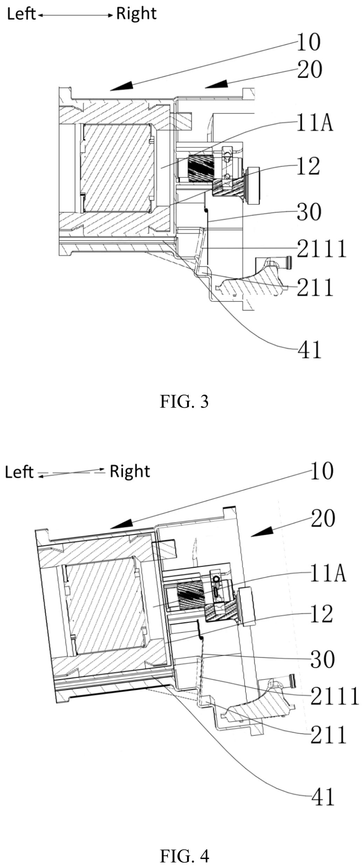

Optionally, as shown in FIGS. 2 to 4, the bottom oil passage 40 is provided on the electric motor housing 11 to form a bottom oil channel 41. The bottom oil channel 41 is arranged to extend along a direction of main shaft of the electric motor 10 on the electric motor housing 11 to guide the oil absorbed by the oil inlet to a corresponding oil outlet that is connected to the bottom oil channel 41. It can be understood that, as shown in FIG. 3, the oil inlet is located at a left end position of the bottom oil channel 41, and the oil outlet is located at a right end position of the bottom oil channel 41.

Optionally, as shown in FIGS. 2 to 4, the electric housing 11 has a partition wall 12 that separates the electric motor cavity 11A and the transmission cavity 21C. The bottom oil passage 40 is disposed on the partition wall 12 to form an oil return port 42. An end of the oil return port 42 is an oil inlet, another end of the oil return port 42 is an oil outlet, and the oil return port 42 is circumferentially arranged on the partition wall 12. It can be seen that the oil return port 42 directly is in communication with the electric motor cavity 11A and the transmission cavity 21C, to quickly guide the oil absorbed by the oil inlets to the corresponding oil outlets that are connected to the oil return port 42, and the oil return port 42 arranged circumferentially on the partition wall 12 can play a role similar to the bottom oil channel 41, the oil is still guided to the gearbox cavity 21C when the electric drive system 1 is tilted in the front-rear direction.

Optionally, the electric drive system 1 includes a first control valve 30 which is fixed on the partition wall 12 for controlling an opening and closing of the bottom oil passage 40. When the electric drive system 1 is in a horizontal state, the first control valve 30 is in an open state, at this time, an oil flows from the oil inlet of the bottom oil passage to the oil outlet. When the electric drive system 1 is in a second preset gradient state, the first control valve 30 is in a closed state.

It should be noted that the above "second preset gradient state" refers to that an electric drive system, under some working conditions, tilts leftward or rightward in the left-right direction, for example, when the electric drive system 1 is fixedly mounted on a vehicle, the second preset gradient state is a state in which, when the vehicle is driving on a lateral gradient with a lateral gradient of 60%, causing the electric drive system 1 to tilt leftward or rightward by about 31°. A direction of tilting is affected by a direction of driving of the vehicle. According to different installation modes of driving components of the electric drive vehicle, the second preset gradient state may be a preset longitudinal slope state or a preset lateral gradient state.

For example, as shown in FIG. 4, when the electric drive system 1 tilts leftward, an oil on the right side in the transmission cavity 21C has a risk of flowing back to the electric motor cavity 11A via the bottom oil passage 40. At this time, the first control valve 30 is closed, a communication between the bottom oil passage 40 and the transmission cavity 21C is cut off, hindering a backflow of oil, improving a level condition of internal oil when the electric drive system 1 tilts in the left-right direction.

Optionally, as shown in FIG. 4, the first control valve 30 is a movable baffle. A normal projection of the movable baffle covers the oil outlet connected to the bottom oil passage 40. In this way, the movable baffle can cover the oil outlet connected to the bottom oil passage 40 by gravity to control the opening and closing of the bottom oil passage 40. It can be understood that the first control valve may also be a one-way valve that is arranged in each bottom oil channel 41 and oil return port 42 to be also capable of achieving a control of the opening and closing of the bottom oil passage 40.

Optionally, as shown in FIG. 3 or FIG. 4, the transmission housing 21 comprises a stepped wall 211 that is located below the bottom oil channel 41. The stepped wall 211 comprises an inclined wall 2111. The inclined wall 2111 is located in an oil discharge direction of the oil outlet which is connected to the bottom oil channel 41. When the electric drive system 1 is in a second preset gradient state, the movable baffle is tilted, due to an own weight of the movable baffle or oil pressure, towards a direction in which the electric drive system 1 tilts, to be attached to the inclined wall 2111, thereby forming a partition at a side of the inclined wall 2111 facing the bottom oil channel 41, to prevent an oil in the transmission cavity from entering the bottom oil passage 40 and causing a backflow.

Optionally, as shown in FIG. 2, a cross-sectional shape of the bottom oil channel 41 or the oil return port 42 is a shape of annular sector. It should be noted that the above "fan-shaped ring" refers to a shape formed by a segment of an annulus along an arc direction thereof. A circumferentially arranged bottom oil channel or oil return port with a shape of annular sector can cover a wider circumferential range, adapting to more severe front-rear tilting working conditions of the electric drive system 1. The cross-section of the bottom oil channel 41 or the oil return port 42 may also be circular, square, or special-shaped.

Optionally, the electric drive system 1 further comprises a bypass oil passage 50 that is provided outside the electric motor housing 11. The bypass oil passage 50 is in communication with the electric motor cavity 11A and the transmission cavity 21C. An end of each bypass oil passage 50 is connected to a corresponding oil inlet, and another end of each bypass oil passage 50 is connected to a corresponding oil outlet. The bypass oil passage 50 can guide the oil in the electric motor cavity 11A into the transmission cavity 21C.

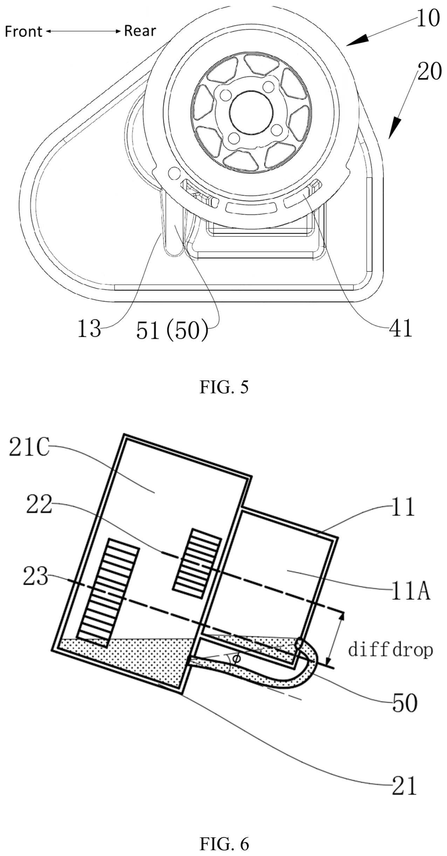

Optionally, as shown in FIG. 6, the transmission 20 comprises an input shaft 22 and an output shaft 23. When the electric drive system 1 is in a horizontal state, there is a vertical height difference ( diff drop) between the input shaft 22 and the output shaft 23. A connecting line between the oil inlet and the oil outlet connected to the bypass oil passage 50 is disposed at an angle φ to a horizontal plane.

It can be understood that, the input shaft 22 is along a direction of a power shaft of the electric motor 10, and the output shaft 23 is along a direction of a final gear shaft of the transmission 20, and thus a height difference between a bottom of the electric motor housing 11 and a bottom of the transmission housing 21 is positively correlated with a magnitude of the aforementioned vertical height difference: diff drop. The larger the diff drop is, the more difficult it is for an oil in the transmission cavity 21C to flow back into the electric motor cavity 11A. A role of the bypass oil passage 50 in this embodiment comprises that when the electric drive system is in a second preset gradient state and a backflow of oil in the transmission cavity 21C occurs, a height of a corresponding oil inlet is still higher than a corresponding oil outlet due to that the connecting line between the oil inlet and the oil outlet connected to the bypass oil passage 50 is disposed at an angle φ to a horizontal plane, and thus, an oil accumulated in the electric motor cavity 11A can flow back to the transmission cavity 21C via the bypass oil passage 50. To adapt to working conditions with different tilt degrees, the angle φ should be adjusted according to the magnitude of the diff drop. The larger the diff drop is, the larger the angle φ is.

Optionally, as shown in FIG. 5, the electric motor 10 comprises a reinforcing plate 13. A side of the reinforcing plate 13 is connected to an exterior of the transmission housing 21, and another side of the reinforcing plate 13 is connected to an exterior of the electric motor housing 11. The bypass oil passage 50 is disposed in the reinforcing plate to form a bypass oil channel 51.

It should be noted that, Optionally, the electric motor 10 does not comprise a reinforcing plate, and a bypass oil channel 51 is formed, but instead an external oil tube is added as the bypass oil passage 50.

Optionally, the electric motor 10 comprises a second control valve, the second control valve is provided in the reinforcing plate 13 and connected to the bypass oil channel 51. When the bypass oil channel 51 is tilted and an oil outlet connected to the bypass oil channel 51 is higher than an oil inlet connected to the bypass oil channel 51, the second control valve blocks the bypass oil channel, thereby hindering an oil from flowing back via the bypass oil channel 51.

Optionally, as shown in FIGS. 1 to 2, the transmission housing 21 comprises an oil baffle rib 212. The transmission cavity 21C comprises a gear cavity 21A and an oil suction cavity 21B which are separated by the oil baffle rib 212. The oil outlet connected to the bypass oil path 50 is in communication with the gear cavity 21A. The oil outlet connected to the bottom oil passage 40 is in communication with the oil suction cavity 21B. Oil discharge directions of the bypass oil passage 50 and the bottom oil passage 40 lead to different regions, so that oil cross-flow can be avoided, and in addition, a simultaneous backflow in both the bypass oil path 50 and the bottom oil passage 40 affected by a tilt of the electric drive system 1 can also be avoided when fluctuations of level of oil are caused by an operation of other components in the transmission 20, such as an oil suction pump.

An embodiment of this invention further provides an electric drive vehicle. The electric drive vehicle is equipped with the electric drive system 1 according to any of the above embodiments. The electric drive vehicle can adapt to longitudinal or lateral gradient road surfaces with different gradients, and the electric drive system of the electric drive vehicle can work stably.

The various embodiments/embodiments provided in this invention can be combined with each other without conflict.

The above description is only an optional embodiment of this invention and are not intended to limit the invention. For those skilled in the art, this invention may have various modifications and variations. Any modification, equivalent substitution, improvement, etc. made within the spirit and principle of this invention shall be comprised in the protection scope of this invention.

## Claims

1. An electric drive system, **characterized by** comprising:
an electric motor comprising an electric motor housing which has an electric motor cavity and oil inlets in communication with the electric motor cavity;
a transmission in power connection with the electric motor, the transmission comprising a transmission housing which has a transmission cavity and oil outlets in communication with the transmission cavity; and
a bottom oil passage in communication with the electric motor cavity and the transmission cavity, one end of the bottom oil passage being connected to a corresponding oil inlet, one end of the bottom oil passage being connected to a corresponding oil outlet;
wherein when the electric drive system is in a horizontal state, heights of all the oil inlets are not lower than a height of any oil outlet, and the oil inlets connected to the bottom oil passage are arranged circumferentially at a bottom of the electric motor housing, so that an oil in the electric motor cavity is capable of flowing back into the transmission cavity when the electric drive system is in a first preset gradient state.

2. The electric drive system according to claim **1,** wherein the electric motor housing and the transmission housing are a housing integrally formed.

3. The electric drive system according to claim 2, wherein the bottom oil passage is provided on the electric motor housing to form a bottom oil channel; and/or,
the electric motor housing has a partition wall separating the electric motor cavity and the transmission cavity, the bottom oil passage being provided on the partition wall to form an oil return port, the oil return port being arranged circumferentially on the partition wall.

4. The electric drive system according to claim 3, further comprising a first control valve which is fixed on the partition wall for controlling an opening and closing of the bottom oil passage;
wherein when the electric drive system is in a horizontal state, the first control valve is in an open state, and when the electric drive system is in a second preset gradient state, the first control valve is in a closed state.

5. The electric drive system according to claim **4,** wherein the first control valve is a movable baffle, a normal projection of the movable baffle covering the oil outlet connected to the bottom oil passage.

6. The electric drive system according to claim 5, wherein the transmission housing comprises a stepped wall which is located below the bottom oil channel, the stepped wall comprising an inclined wall, the inclined wall being located in an oil discharge direction of the oil outlet connected to the bottom oil channel, the movable baffle being capable of being attached to the inclined wall when the electric drive system is in the second preset gradient state.

7. The electric drive system according to claim 3, wherein a cross-section of the bottom oil channel or the oil return port has a shape of annular sector.

8. The electric drive system according to claim 1, further comprising a bypass oil passage which is provided outside the electric motor housing and in communication with the electric motor cavity and the transmission cavity, an end of each bypass oil passage being connected to a corresponding oil inlet, another end of each bypass oil passage being connected to a corresponding oil outlet.

9. The electric drive system according to claim 8, wherein the transmission comprises an input shaft and an output shaft between which there is a height difference, a connecting line between the oil inlet and the oil outlet connected to the bypass oil passage being disposed at an angle to a horizontal plane when the electric drive system is in a horizontal state; and/or,
the electric motor comprises a reinforcing plate, a side of the reinforcing plate being connected to an outside of the transmission housing, another side of the reinforcing plate being connected to an outside of the electric motor housing, the bypass oil passage being provided in the reinforcing plate to form a bypass oil channel.

10. The electric drive system according to claim 9, wherein the electric motor comprises a second control valve which is disposed in the reinforcing plate and connected to the bypass oil channel, and wherein the second control valve blocks the bypass oil channel, when the bypass oil channel is tilted and the oil outlet connected to the bypass oil channel is higher than the oil inlet connected to the bypass oil channel.

11. The electric drive system according to claim 8, wherein the transmission housing comprises an oil baffle rib, the transmission cavity comprising a gear cavity and an oil suction cavity which are separated by the oil baffle rib, the oil outlet connected to the bypass oil passage being in communication with the gear cavity, the oil outlet connected to the bottom oil passage being in communication with the oil suction cavity.

12. An electric drive vehicle, **characterized by** comprising the electric drive system according to any one of claims 1-11.
